(19) Europäisches Patentamt
European Patent Office
Office européen des brevets

(11) **EP 3 920 531 A1**

(12) **EUROPEAN PATENT APPLICATION**
published in accordance with Art. 153(4) EPC

(43) Date of publication:
**08.12.2021 Bulletin 2021/49**

(21) Application number: **20747700.1**

(22) Date of filing: **08.01.2020**

(51) Int Cl.:
*H04N 7/18* (2006.01)     *A01K 45/00* (2006.01)

(86) International application number:
**PCT/JP2020/000219**

(87) International publication number:
**WO 2020/158307 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.01.2019 JP 2019014721**

(71) Applicant: **Panasonic Intellectual Property Management Co., Ltd.**
**Osaka-shi, Osaka 540-6207 (JP)**

(72) Inventors:
• **NAGATOMO, Shingo**
**Osaka-shi, Osaka 540-6207 (JP)**
• **INABA, Yuichi**
**Osaka-shi, Osaka 540-6207 (JP)**
• **OZAKI, Mamoru**
**Osaka-shi, Osaka 540-6207 (JP)**

(74) Representative: **Appelt, Christian W.**
**Boehmert & Boehmert**
**Anwaltspartnerschaft mbB**
**Pettenkoferstrasse 22**
**80336 München (DE)**

(54) **LIVESTOCK HOUSE MONITORING METHOD AND LIVESTOCK HOUSE MONITORING SYSTEM**

(57)     A livestock house monitoring method includes: capturing a moving image of an inside of a poultry house (S11); converting a plurality of images included in the moving image captured into black-and-white images (S12); and generating an image for monitoring purposes showing a distribution of chickens inside the poultry house by performing statistical processing on the plurality of images converted into the black-and-white images (S13). The poultry house is an example of a livestock house, and chickens are an example of livestock.

FIG. 3

```
        ( Start )
            |
            v                        S11
  +---------------------------+
  | Capture moving image of   |
  | inside of poultry house   |
  +---------------------------+
            |
            v                        S12
  +---------------------------+
  | Convert images included   |
  | in moving image into      |
  | black-and-white images    |
  +---------------------------+
            |
            v                        S13
  +----------------------------------+
  | Generate image for monitoring    |
  | purposes by performing averaging |
  | processing on black-and-white    |
  | images                           |
  +----------------------------------+
            |
            v                        S14
  +---------------------------+
  | Display image for         |
  | monitoring purposes       |
  +---------------------------+
            |
            v
         ( End )
```

EP 3 920 531 A1

# Description

[Technical Field]

The present invention relates to a livestock house monitoring method used in a livestock house.

[Background Art]

Livestock farming is an active industry in many countries of the world including Japan. As a technique related to livestock farming, Patent Literature (PTL) 1 discloses the automatic mortality rate determination method for automatically determining the mortality rate of chickens from images captured by a thermograph.

[Citation List]

[Patent Literature]

[PTL 1] Japanese Unexamined Patent Application Publication No. 2006-50989

[Summary of Invention]

[Technical Problem]

There are cases where images of an inside of a livestock house captured by a camera are used for monitoring livestock. However, it is difficult to appropriately understand the state of livestock by only visually identifying the captured images.

The present invention provides a livestock house monitoring system, a program, and a livestock house monitoring method which are capable of presenting a distribution of livestock inside a livestock house.

[Solution to Problem]

A livestock house monitoring method according to an aspect of the present invention includes: capturing a moving image of an inside of a livestock house; converting a plurality of images included in the moving image captured into black-and-white images; and generating an image for monitoring purposes showing a distribution of livestock inside the livestock house by performing statistical processing on the plurality of images converted into the black-and-white images.

A program according to an aspect of the present invention is a program for causing a computer to execute the livestock house monitoring method.

A livestock house monitoring system according to an aspect of the present invention includes: an image capturer that captures a moving image of an inside of a livestock house; and an information processor that converts a plurality of images included in the moving image captured by the image capturer into black-and-white images, and generates an image for monitoring purposes showing a distribution of livestock inside the livestock house by performing statistical processing on the plurality of images converted into the black-and-white images.

[Advantageous Effects of Invention]

A livestock house monitoring method, a program, and a livestock house monitoring system according to the present invention are capable of presenting a distribution of livestock inside a livestock house.

[Brief Description of Drawings]

[FIG. 1] FIG. 1 is a diagram schematically illustrating an overview of a livestock house monitoring system according to an embodiment.
[FIG. 2] FIG. 2 is a block diagram illustrating a functional configuration of the livestock house monitoring system according to the embodiment.
[FIG. 3] FIG. 3 is a flowchart illustrating operation for generating an image for monitoring purposes which is performed by the livestock house monitoring system according to the embodiment.
[FIG. 4] FIG. 4 is a diagram illustrating a method for generating the image for monitoring purposes which is employed by the livestock house monitoring system according to the embodiment.
[FIG. 5] FIG. 5 is a diagram illustrating an example of a moving image of an inside of a poultry house which is captured by an image capturer.
[FIG. 6] FIG. 6 is a diagram illustrating an example of an image for monitoring purposes.
[FIG. 7] FIG. 7 is a flowchart illustrating operation for calculating a presence ratio which is performed by the livestock house monitoring system according to the embodiment.
[FIG. 8] FIG. 8 is a diagram illustrating an example of particular areas.
[FIG. 9] FIG. 9 is a flowchart illustrating operation for calculating a presence ratio change which is performed by the livestock house monitoring system according to the embodiment.
[FIG. 10] FIG. 10 is a diagram illustrating an example of a display screen that simultaneously displays an image for monitoring purposes and environmental data.
[FIG. 11] FIG. 11 is a diagram illustrating an example of a display screen that simultaneously displays changes in a presence ratio over time and changes in environmental data over time.
[FIG. 12] FIG. 12 is a diagram illustrating an overview of a livestock house monitoring system according to Variation 2.
[FIG. 13] FIG. 13 is a diagram illustrating an example of an image of an inside of a poultry house which is captured by an imaging device that functions as a fisheye camera.

[FIG. 14] FIG. 14 is a diagram illustrating an example of an image obtained by correcting the image of the inside of the poultry house which is captured by the imaging device that functions as a fisheye camera.

[Description of Embodiments]

Hereinafter, embodiments will be described with reference to the drawings. Note that the embodiments described below each show a general or specific example. The numerical values, shapes, structural elements, the arrangement and connection of the structural elements, steps, and the processing order of the steps, etc. presented in the embodiments below are mere examples and do not limit the present invention. Furthermore, among the structural elements in the embodiments below, those not recited in any one of the independent claims representing the most generic concepts will be described as optional structural elements.

Note that the drawings are schematic diagrams, and do not necessarily provide strictly accurate illustration. Throughout the drawings, the same numeral is given to substantially the same element, and redundant description is omitted or simplified.

[Embodiment]

[Configuration]

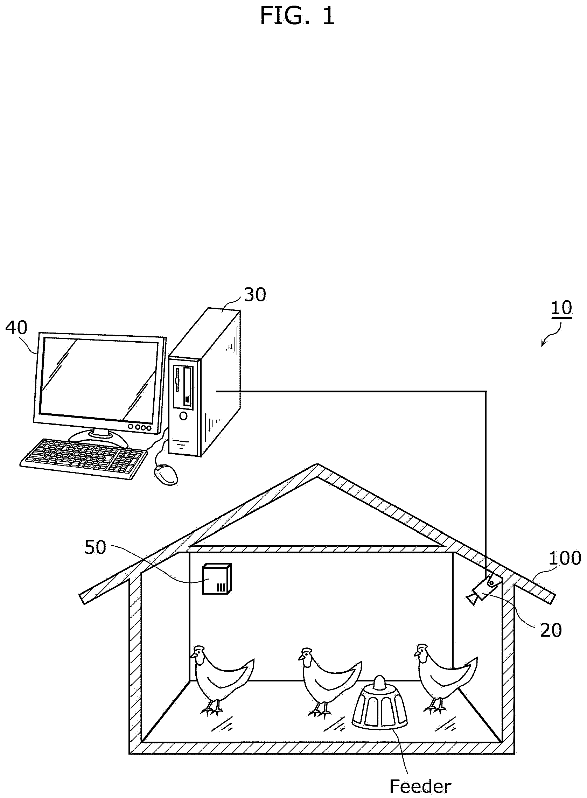

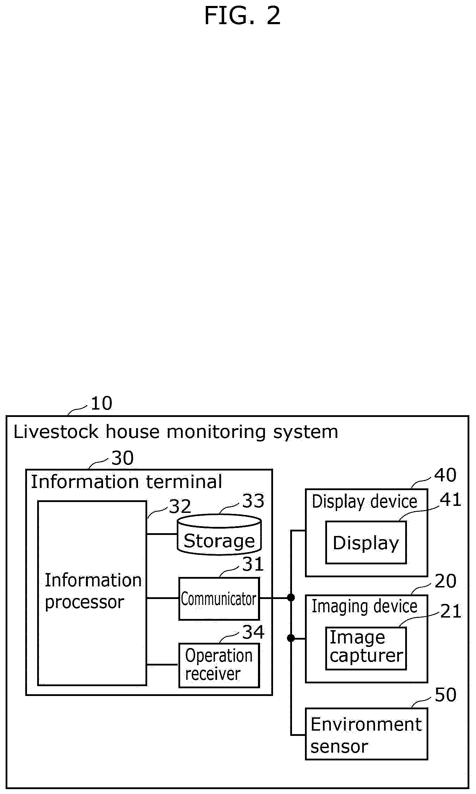

First, a configuration of a livestock house monitoring system according to an embodiment will be described. FIG. 1 is a diagram illustrating an overview of the livestock house monitoring system according to the embodiment. FIG. 2 is a block diagram illustrating a functional configuration of the livestock house monitoring system according to the embodiment.

As illustrated in FIG. 1, livestock house monitoring system 10 according to the embodiment is a poultry house monitoring system provided in poultry house 100. A breed of chickens raised in poultry house 100 is, for example, a broiler chicken (more specifically, Chunky, Cobb, Arbor Acres, etc.), but may be other breeds of chickens, such as the so-called locally produced chicken. Poultry house 100 is provided with feeders, waterers (not illustrated in FIG. 1), etc. Poultry house 100 is an example of a livestock house, and chickens are an example of livestock in poultry house 100.

Livestock house monitoring system 10 generates an image for monitoring purposes showing a distribution of chickens inside poultry house 100 by processing an image of an inside of poultry house 100 which is captured by imaging device 20, and displays the generated image for monitoring purposes on display device 40. With this, a manager and the like of poultry house 100 can readily understand the distribution of chickens inside poultry house 100.

As illustrated in FIG. 1 and FIG. 2, livestock house monitoring system 10 specifically includes imaging device 20, information terminal 30, display device 40, and environment sensor 50. Hereinafter, each of the devices will be described in detail.

[Imaging device]

Imaging device 20 captures a moving image of an inside of poultry house 100. Imaging device 20 is provided on, for example, a ceiling of poultry house 100, and image capturer 21 captures, from the above, a moving image showing the inside of poultry house 100. The moving image consists of a plurality of images (i.e., a plurality of frames). Imaging device 20 is provided with image capturer 21.

Image capturer 21 is an imaging module that includes an image sensor, and an optical system (a lens, etc.) that guides light to the image sensor. Specifically, the image sensor is a complementary metal oxide semiconductor (CMOS) sensor, a charge coupled device (CCD) sensor, etc. An image captured by image capturer 21 is processed by information terminal 30.

[Information terminal]

Information terminal 30 is an information terminal used by a manager and the like of poultry house 100. Information terminal 30 monitors a distribution of chickens in poultry house 100 by processing a moving image showing the inside of poultry house 100 which is captured by imaging device 20. Information terminal 30 is, for example, a personal computer, but may be a smartphone or a tablet terminal. In addition, information terminal 30 may be a device exclusively used for livestock house monitoring system 10. Information terminal 30 is specifically provided with communicator 31, information processor 32, storage 33, and operation receiver 34.

Communicator 31 is an example of an obtainer, and obtains a moving image captured by image capturer 21 included in imaging device 20. In addition, under the control of information processor 32, communicator 31 transmits, to display device 40, image information for displaying an image for monitoring purposes showing a distribution of chickens inside poultry house 100. Communicator 31 obtains environmental data from environment sensor 50. Specifically, communicator 31 is a communication module that performs wired or wireless communication. The communication module is, in other words, a communication circuit. The communication method employed by communicator 31 is not particularly limited. Communicator 31 may include three types of communication modules for communicating with each of imaging device 20, display device 40, and environment sensor 50. In addition, a relay device, such as a router, may be interposed between communicator 31 and each of imaging device 20, display device 40, and environment sensor 50.

Information processor 32 is an information processor that processes a moving image obtained by communicator 31 for generating an image for monitoring purposes showing a distribution of chickens inside poultry house 100. Specifically, information processor 32 is implemented by a microcomputer, but information processor 32 may be implemented by a processor or a dedicated circuit. Information processor 32 may be implemented by combining two or more of the following devices: a microcomputer, a processor, and a dedicated circuit. Note that the details of image processing performed by information processor 32 will be described later.

Storage 33 stores a control program which is executed by information processor 32. In addition, storage 33 stores, for example, a moving image obtained by communicator 31. Storage 33 is implemented by, for example, a semiconductor memory.

Operation receiver 34 is a user interface device that receives an operation performed by a manager and the like of poultry house 100. Operation receiver 34 is implemented by, for example, a mouse, a keyboard, etc. Operation receiver 34 may be implemented by a touch panel, etc.

[Display device]

Display device 40 displays an image for monitoring purposes generated by information processor 32. Display device 40 includes display 41. Display 41 displays an image for monitoring purposes based on image information transmitted from communicator 31.

Specifically, display device 40 is a monitor for a personal computer, but it may be a smartphone or a tablet computer, for example. When information terminal 30 is a smartphone and the like, information terminal 30 may include display 41, instead of display device 40 including display 41. Specifically, display 41 is implemented by a liquid crystal panel or an organic electroluminescent (EL) panel.

[Environment sensor]

Environment sensor 50 is a sensor that measures environmental data of an environment surrounding the chickens. Specifically, environment sensor 50 measures environmental data of an inside of poultry house 100 and environmental data of an outside of poultry house 100. Environment sensor 50 is a temperature sensor that measures at least one of temperature data of the inside of poultry house 100 and temperature data of the outside of poultry house 100, for example. However, environment sensor 50 may be a humidity sensor that measures at least one of humidity data of the inside of poultry house 100 and humidity data of the outside of poultry house 100.

Moreover, environment sensor 50 may be a brightness sensor that measures brightness of the inside of poultry house 100, a smell sensor that measures a smell of the inside of poultry house 100, a microphone that measures a noise of the inside of poultry house 100, and a $CO_2$ concentration sensor that measure a $CO_2$ concentration of the inside of poultry house 100. In other words, the environmental data may be brightness data, smell data, noise data, $CO_2$ concentration data, etc.

[Operation for generating image for monitoring purposes]

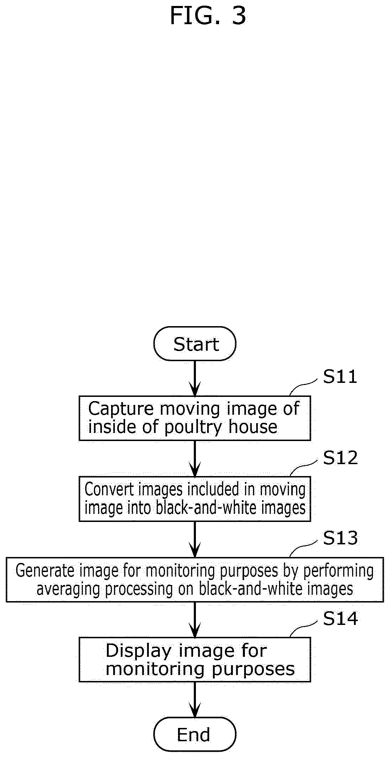

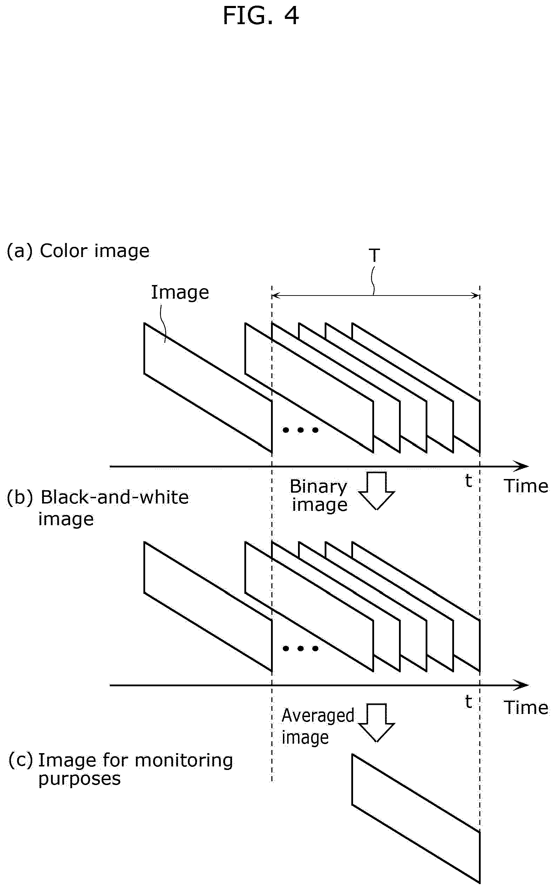

As described above, livestock house monitoring system 10 generates an image for monitoring purposes showing a distribution of chickens inside poultry house 100. Operation for generating an image for monitoring purposes of such livestock house monitoring system 10 will be described. FIG. 3 is a flowchart illustrating operation for generating an image for monitoring purposes which is performed by livestock house monitoring system 10. FIG. 4 is a diagram illustrating a method for generating an image for monitoring purposes.

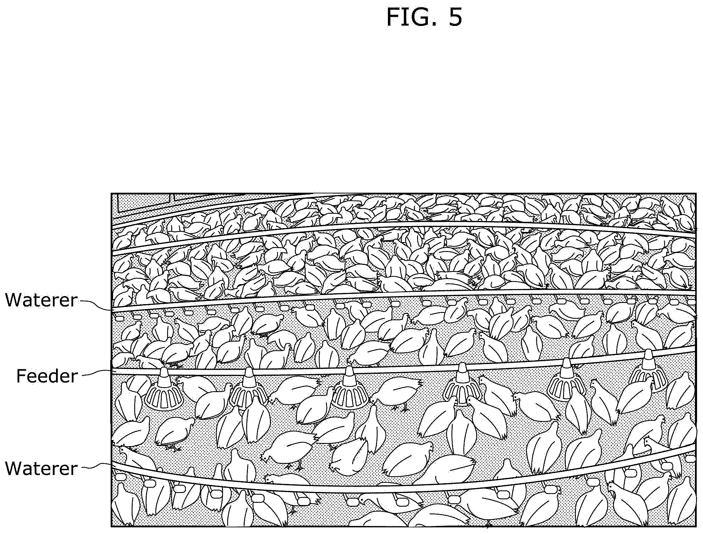

First, image capturer 21 of imaging device 20 captures a moving image of an inside of poultry house 100 (S11). FIG. 5 is a diagram illustrating an example of the moving image of the inside of poultry house 100 which is captured by image capturer 21.

Next, information processor 32 of information terminal 30 obtains the moving image of the inside of poultry house 100 which is captured by image capturer 21 in a predetermined period, and converts a plurality of images included in the obtained moving image into black-and-white images (S12). More specifically, the plurality of images are different images captured at different times. In other words, the plurality of images are a plurality of frames or a plurality of still images. In (a) of FIG. 4, a plurality of images captured during predetermined period T are illustrated. In (b) of FIG. 4, the plurality of images that are converted into black-and-white images are illustrated.

Note that, as illustrated in FIG. 4, a plurality of images (frames) captured during predetermined period T that includes time t as an ending time point are used, in order to generate an image for monitoring purposes captured at time t. Alternatively, a plurality of images captured during a predetermined period that includes time t as a mid-time point may be used, or a plurality of images captured during a predetermined period that includes time t as a starting time point may be used, in order to generate an image for monitoring purposes captured at time t. The predetermined period lasts, for example, one hour, but it may last 24 hours. The length of the predetermined period is not particularly limited. The plurality of images are captured in a temporally continuous manner, for example. However, when averaging processing is performed, some of images among the plurality of images captured in a temporally continuous manner may be thinned out.

When an image captured by image capturer 21 is a color image, information processor 32 converts the obtained color image into a grayscale image. The grayscale image is converted into a binary image by comparing a pixel value of each of a plurality of pixels included in the gray scale image with a threshold. In other words, information processor 32 converts the grayscale image into a black-and-white image. The black-and-white image is an image having a plurality of pixels each of which is either black or white. The black-and-white image is, in other words, an image captured by image capturer 21 and converted into a binary image. When an image captured by image capturer 21 is a grayscale image, processing for converting a color image into a grayscale image is omitted.

In a black-and-white image, it is desirable that a portion where at least a chicken is captured is shown in white and that the rest is shown in black. Accordingly, a threshold used for converting an image into a binary image is appropriately determined in a manner that the portion where the at least a chicken is present is selectively shown in white. Note that the P-tile method, the mode method, and the discriminant analysis method, etc. have been known as typical methods for calculating a threshold used for converting an image into a binary image, and a threshold may be determined using such methods. In addition, feeder 50 etc. which are placed inside poultry house 100 may have coloration which is more than likely to be black when an image is converted into a binary image. In other words, feeder 50 may have coloration different from chickens.

Next, information processor 32 generates an image for monitoring purposes showing a distribution of the chickens inside poultry house 100 by performing averaging processing on the plurality of black-and-white images (S13). In (c) of FIG. 4, an image for monitoring purposes is illustrated.

When the coordinates of a pixel are expressed as (vertical, horizontal) = (i,j), pixel value yi,j of a pixel of the generated image for monitoring purposes is equivalent to an average value of pixel values $y_{i,j}$ of pixels of the plurality of black-and-white images. Although each of pixel values of pixels included in a black-and-white image is either zero (e.g., black) or one (e.g., white), each of pixel values of pixels included in an image for monitoring purposes has an optional value ranging from zero to one. Note that in step S13, instead of the averaging processing, processing for calculating the mean value of pixel values of pixels of a plurality of black-and-white images, processing for calculating the root mean square of pixel values of pixels of a plurality of black-and-white images, etc. may be performed. In step S13, statistical processing is to be performed on the plurality of black-and-white images.

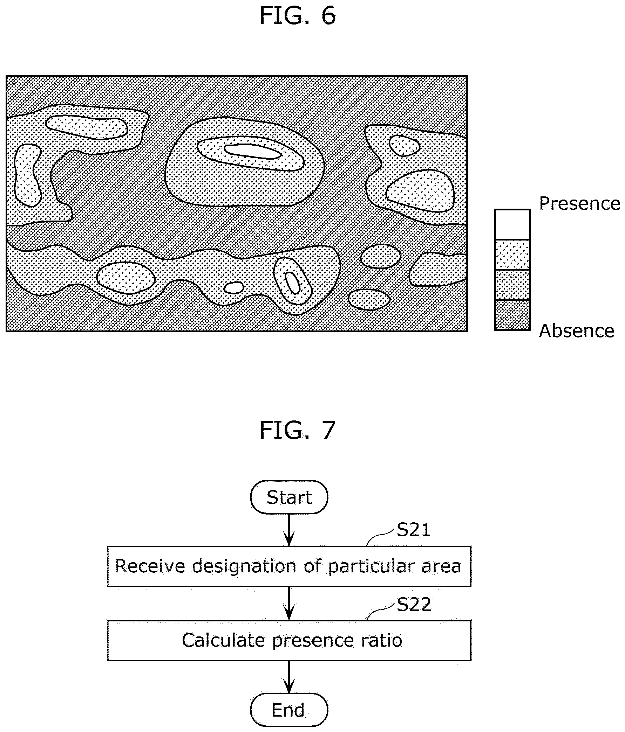

Then, information processor 32 causes communicator 31 to transmit image information for displaying the image for monitoring purposes. Display device 40 receives the image information, and display 41 displays the image for monitoring purposes based on the received image information (S14). FIG. 6 is a diagram illustrating an example of an image for monitoring purposes.

An image for monitoring purposes is, for example, a color image in a heat map form. In an image for monitoring purposes, a portion in which pixel values of pixels are close to one is a place where chickens are likely to be present, and a portion in which pixel values of pixels are close to zero is a place where chickens are unlikely to be present. Accordingly, if an image for monitoring purposes is displayed in a heat map form (e.g., a pixel having a pixel value of one is displayed in red and a pixel having a pixel value of zero is displayed in blue), a manager and the like of poultry house 100 can readily understand the distribution of chickens inside poultry house 100. Note that an image for monitoring purposes is displayed as, for example, a still image, but an image for monitoring purposes may be displayed as a moving image.

[Operation for calculating presence ratio]

Livestock house monitoring system 10 may calculate, using an image for monitoring purposes, a presence ratio which is a parameter indicating the state of presence of chickens inside poultry house 100. The presence ratio is a parameter indicating how many chickens are present in a particular area of an image, compared to the rest of the area of the image. The presence ratio is an example of a first parameter. FIG. 7 is a flowchart illustrating operation for calculating a presence ratio which is performed by such livestock house monitoring system 10.

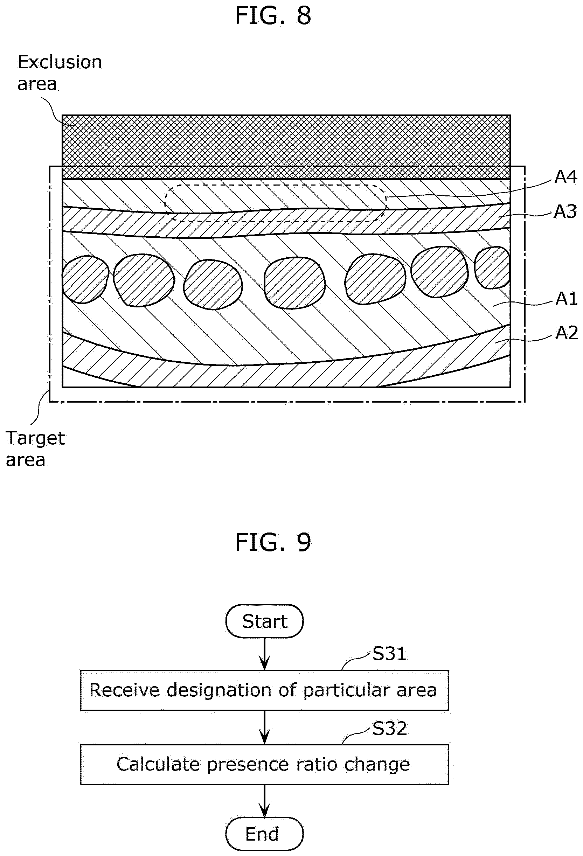

First, operation receiver 34 receives, from a manager and the like of poultry house 100, an operation for designating a particular area. Consequently, information processor 32 receives designation of the particular area (S21). The particular area is a partial area of an image. FIG. 8 is a diagram illustrating an example of particular areas. The locations of feeders and waterers in FIG. 8 approximately correspond with the locations of feeders and waterers in FIG. 5.

As illustrated in FIG. 8, particular area A1 is in the vicinity of feeders, and particular area A2 is in the vicinity of waterers (more specifically, waterers located in the lower part of FIG. 5). Particular area A3 is in the vicinity of waterers (more specifically, waterers located in the upper part of FIG. 5), and particular area A4 is the central area of poultry house 100. In step S21, at least one of particular areas A1 through A4 is to be designated. A particular area may be designated in any way. Note that although a particular area is described as an area of an image, a particular area can be considered to be an area of poultry house 100 which is captured in an image. In other words, a particular area can be considered to be an area inside poultry house 100.

Next, information processor 32 calculates a presence ratio in the particular area of an image for monitoring purposes (S22). Specifically, information processor 32 calculates a presence ratio by dividing the sum total of pixel values of pixels included in the particular area by the sum total of pixel values of pixels included in a target area. When a set of pixels included in the particular area is specified as $S_k$, and a set of pixels included in the target area is specified as $S_{ROI}$, presence ratio $r_k$ is expressed by the following mathematical formula.

[Math 1]

$$r_k = \frac{\sum_{(i,j)\in S_k} y_{i,j}}{\sum_{(i,j)\in S_{ROI}} y_{i,j}}$$

Note that the target area includes the particular area, and is larger than the particular area. Although the entirety of an image for monitoring purposes may be determined to be a target area, an example in FIG. 8 has an exclusion area in the upper part (i.e., an area where chickens are captured in a densely packed manner in FIG. 5) of the image. That is, the upper part of the image is excluded from the target area. By excluding, from the target area, an area where chickens are captured as if they are densely packed due to an installation angle of image capturer 21, it is possible to improve the accuracy of calculating a presence ratio.

For example, if a presence ratio is calculated for each of particular areas A1 through A4, and if a graph showing changes in the presence ratio over time is created for each of particular areas A1 through A4 to be displayed on display 41, a manager and the like of poultry house 100 can readily understand the distribution of chickens in each time frame.

[Operation for calculating presence ratio change]

Livestock house monitoring system 10 may calculate, using an image for monitoring purposes, a presence ratio change which is a parameter indicating the amount of activity of chickens inside poultry house 100. A presence ratio change is an example of a second parameter. FIG. 9 is a flowchart illustrating operation for calculating a presence ratio change which is performed by such livestock house monitoring system 10.

A plurality of images for monitoring purposes are used for the calculation of a presence ratio change. The following describes operation for calculating a presence ratio change using a first image for monitoring purposes captured at time t1 and a second image for monitoring purposes captured at time t2 which is time after time t1.

First, operation receiver 34 receives, from a manager and the like of poultry house 100, an operation for designating a particular area. Consequently, information processor 32 receives the designation of the particular area (S31). The particular area is a partial area of an image.

Next, information processor 32 calculates a presence ratio change in the particular area (S32). Specifically, information processor 32 divides the sum total of absolute values of differences in pixel values between corresponding pixels included in particular areas in a plurality of images for monitoring purposes (the first image for monitoring purposes and the second image for monitoring purposes) by the number of pixels included in the particular area.

When a pixel value of a pixel of the first image for monitoring purposes is specified as $x1_{i,j}$, and when a pixel value of a pixel of the second image for monitoring purposes is specified as $x2_{i,j}$, absolute value $c_{i,j}$ of a difference in pixel values between corresponding pixels can be expressed as $c_{i,j} = |x1_{i,j} - x2_{i,j}|$. When a set of pixels in a particular area is specified as $S_k$, presence ratio change $c_k$ is expressed by the following mathematical formula. Note that $|S_k|$ denotes the number of pixels included in a particular area.

[Math 2]

$$c_k = |S_k|^{-1} \sum_{(i,j)\in S_k} c_{i,j}$$

For example, if a presence ratio change is calculated for each of particular areas A1 through A4, and if a graph showing changes in the presence ratio changes over time is created for each of particular areas A1 through A4 to be displayed on display 41, a manager and the like of poultry house 100 can readily understand the presence ratio changes (i.e., the amounts of activity) in chickens in each time frame.

[Variation 1]

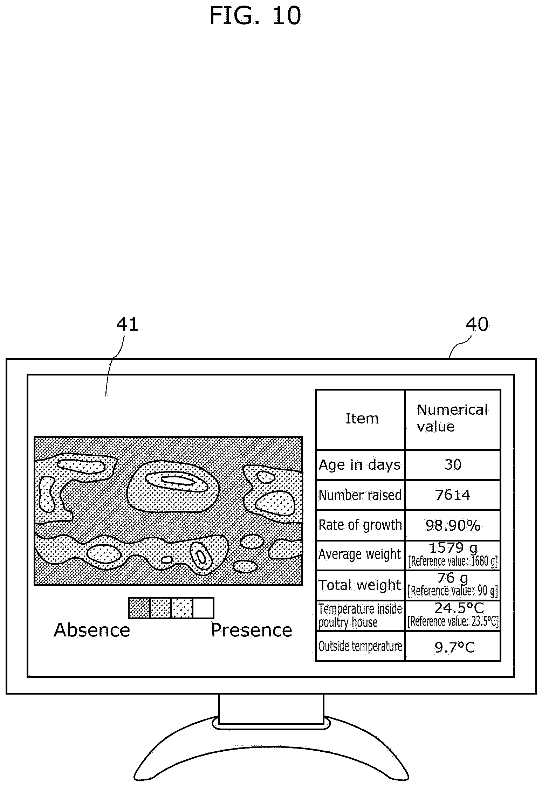

Display 41 may display environmental data measured by environment sensor 50 when an image for monitoring purposes is displayed. FIG. 10 is a diagram illustrating an example of a display screen that simultaneously displays an image for monitoring purposes and environmental data.

As the environmental data, the display screen in FIG. 10 displays temperature data of the inside of poultry house 100 and temperature data of the outside (i.e., outside air temperature) of poultry house 100. The display of such items of environmental data is implemented by communicator 31 obtaining items of environmental data measured by environment sensor 50, and by display 41 of display device 40 displaying, under the control of information processor 32, the obtained items of environmental data. Note that humidity data measured by environment sensor 50 may be displayed as the environmental data, instead of or in addition to the temperature data. In addition, as other items of environmental data, at least one of brightness data, smell data, noise data, and $CO_2$ concentration data may be displayed on the display screen.

If an image for monitoring purposes and environmental data are simultaneously displayed as described above, a manager and the like of poultry house 100 can understand, at a glance, the distribution of chickens inside poultry house 100 and environmental data.

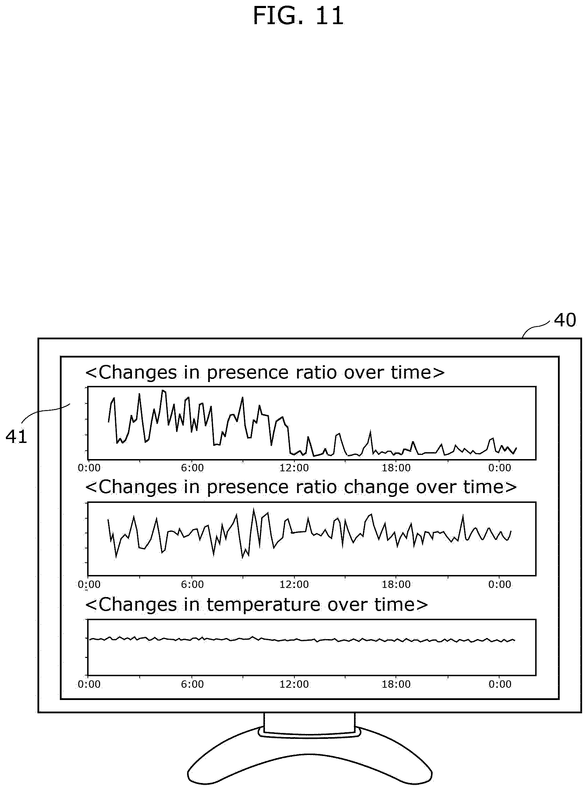

Note that environmental data may be displayed along with a presence ratio. FIG. 11 is a diagram illustrating an example of a display screen that simultaneously displays changes in a presence ratio over time and changes in environmental data over time.

If a graph showing changes in a presence ratio over time and a graph showing changes in environmental data over time are created and displayed on display 41 as illustrated in FIG. 11, a manager and the like of poultry house 100 can readily understand a relationship between the distribution of chickens and the environmental data.

In addition, the example of FIG. 11 also displays changes in a presence ratio change over time. If a graph showing changes in a presence ratio change over time and a graph showing changes in environmental data over time are created and displayed on display 41 as illustrated in FIG. 11, a manager and the like of poultry house 100 can readily understand a relationship between the amount of activity of chickens and the environmental data.

In addition, other than the environmental data, the display screen illustrated in FIG. 10 displays data indicating the state of growth of chickens inside poultry house 100, such as an age in days, the number raised, the rate of growth, the average weight, and an increase in weight (an increase in the weight of a chicken from a day before). Note that reference values (i.e., standard values) specified in, for example, a manual for raising chickens may be displayed in addition to the measured values.

If an image for monitoring purposes and growth data are simultaneously displayed as described above, a manager and the like of poultry house 100 can understand, at a glance, the distribution of chickens inside poultry house 100 and the growth data.

Note that the growth data may be displayed along with a presence ratio or with a presence ratio change.

[Variation 2]

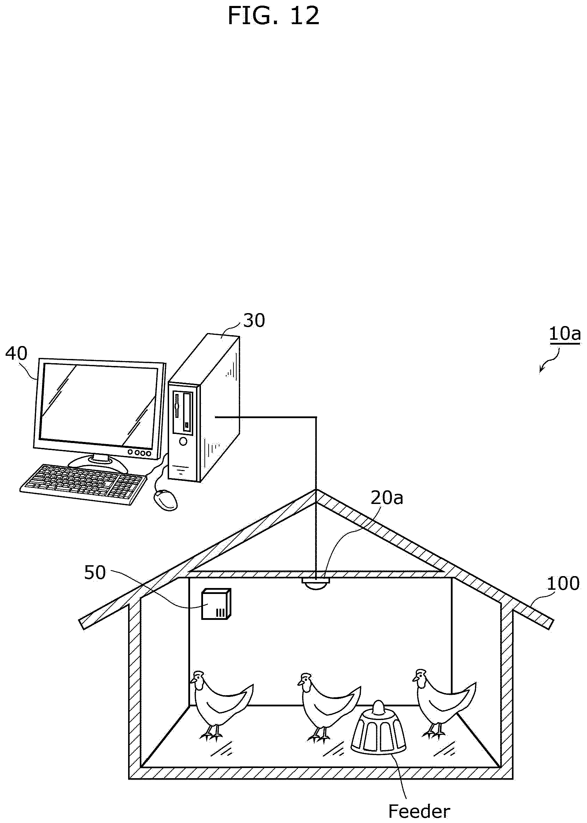

An imaging device provided inside poultry house 100 may be a fisheye camera. FIG. 12 is a diagram illustrating an overview of a livestock house monitoring system according to such Variation 2.

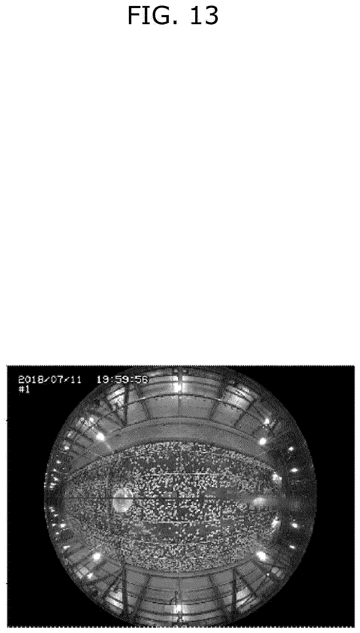

Imaging device 20a included in livestock house monitoring system 10a illustrated in FIG. 12 is a fisheye camera. Such imaging device 20a is implemented by imaging device 20a that includes an image capturer (not illustrated) provided with a fisheye lens, for example. Imaging device 20a is attached on the ceiling of poultry house 100, and captures, from directly above, the inside of poultry house 100. FIG. 13 is a diagram illustrating an example of a moving image of the inside of poultry house 100 which is captured by imaging device 20a.

If the inside of poultry house 100 is diagonally captured from the above as in livestock house monitoring system 10, a location distant from imaging device 20 will be captured as if chickens are densely packed together. If this happens, there may be a case where an effort of excluding such an area is necessary when parameters, such as a presence ratio, are calculated as described above.

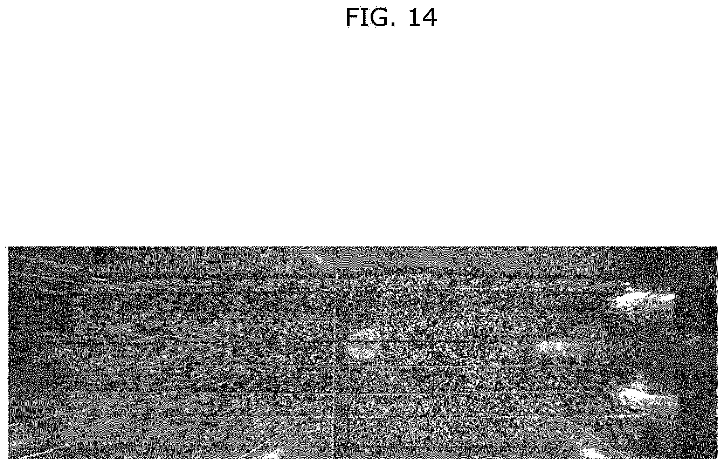

In contrast, a moving image captured by the fisheye camera as illustrated in FIG. 13 is readily corrected to an image that captures, from directly above, the entirety of the inside of poultry house 100 as illustrated in FIG. 14 by performing image processing (more specifically, projective transformation processing that converts an equidistant projection image into a central projection image). That is, imaging device 20a can readily capture the entirety of the inside of poultry house 100. FIG. 14 is a diagram illustrating an example of an image obtained by correcting (i.e., performing projective transformation processing on) an image of the inside of poultry house 100 which is captured by imaging device 20a. As has been described above, imaging device 20a is suitable for generation of an image for monitoring purposes and for calculation of parameters using the image for monitoring purposes.

Note that when an image for monitoring purposes is generated using imaging device 20a, projective transformation processing may be performed on an image before the image is converted into a black-and-white image, or an image may be converted into a black-and-white image before projective transformation processing is performed on the image.

[Advantageous effects, etc.]

As has been described above, a livestock house monitoring method that is executed by a computer such as livestock house monitoring system 10 includes: capturing a moving image of an inside of poultry house 100 (S11); converting a plurality of images included in the moving image captured into black-and-white images (S12); and generating an image for monitoring purposes showing a distribution of chickens inside poultry house 100 by performing statistical processing on the plurality of images converted into the black-and-white images (S13). Poultry house 100 is an example of a livestock house, and the chickens are an example of livestock.

Such a livestock house monitoring method can present a distribution of chickens inside poultry house 100 to a manager and the like of poultry house 100 using an image for monitoring purposes.

In addition, for example, the livestock house monitoring method further includes calculating a first parameter indicating a state of presence of the chickens in a particular area, based on the image for monitoring purposes generated (S22). the particular area is a partial area of the image for monitoring purposes. The first parameter is a presence ratio described in the above embodiments, for example. The first parameter is to be a parameter indicating the state of presence of the chickens inside poultry house 100. The first parameter may be calculated using a method different from the method used for calculating a presence ratio change described in the above embodiments.

Such a livestock house monitoring method can quantify the state of presence of chickens in a particular area inside poultry house 100 to be presented to a manager and the like of poultry house 100.

In addition, the calculating of the first parameter includes calculating the first parameter by dividing a sum total of pixel values of pixels included in the particular area by a sum total of pixel values of pixels included in a target area. The target area includes the particular area and is larger than the particular area.

Such a livestock house monitoring method can quantify the state of presence of chickens in the particular area inside poultry house 100 by performing a calculation using pixel values.

In addition, the generating includes generating a plurality of images for monitoring purposes each of which is the image for monitoring purposes. Furthermore, the livestock house monitoring method includes calculating a second parameter indicating an amount of activity of the chickens in a particular area, based on the plurality of images for monitoring purposes generated (S32). The second parameter is a presence ratio change described in the above embodiments, for example. The second parameter is to be a parameter indicating an amount of activity. The second parameter may be calculated using a method different from the method used for calculating a presence ratio change described in the above embodiments.

Such a livestock house monitoring method can quantify the amount of activity of chickens in the particular area inside poultry house 100 to be presented to a manager and the like of poultry house 100.

In addition, the calculating of the second parameter includes calculating the second parameter by dividing a sum total of absolute values of differences in pixel values between corresponding pixels included in particular areas in the plurality of images for monitoring purposes by a total number of pixels included in the particular area. The particular areas each are the particular area.

Such a livestock house monitoring method can quantify the amount of activity of chickens in the particular area inside poultry house 100 by performing a calculation using pixel values and the number of pixels.

In addition, for example, the livestock house monitoring method further includes receiving designation of the particular area (S21 and S31).

Such a livestock house monitoring method can calculate the first parameter and the second parameter in the designated particular area.

In addition, for example, the livestock house monitoring method further includes displaying the image for monitoring purposes generated (S14).

Such a livestock house monitoring method can display a distribution of chickens inside poultry house 100.

In addition, for example, the livestock house monitoring method further includes obtaining environmental data of an environment surrounding the chickens. The displaying (S14) includes simultaneously displaying the image for monitoring purposes and the environmental data obtained. The environmental data indicates an environment inside poultry house 100.

Such a livestock house monitoring method can display a distribution of chickens inside poultry house 100 along with environmental conditions surrounding the chickens.

In addition, for example, the capturing (S11) includes capturing a moving image of an entirety of the inside of poultry house 100.

Such a livestock house monitoring method can present a distribution of chickens in the entire poultry house 100 to a manager and the like of poultry house 100.

In addition, livestock house monitoring system 10 includes: image capturer 21 that captures a moving image of an inside of poultry house 100; and information processor 32 that converts a plurality of images included in the moving image captured by image capturer 21 into black-and-white images, and generates an image for monitoring purposes showing a distribution of livestock inside poultry house 100 by performing statistical processing on the plurality of images converted into the black-and-white images.

Such livestock house monitoring system 10 can present a distribution of chickens inside poultry house 100 to a manager and the like of poultry house 100 using an image for monitoring purposes.

[Other embodiments]

The above has described the livestock house monitoring system according to the embodiments, yet the present invention is not limited to the above embodiments.

For example, processing performed on each pixel in the above-described embodiments may be performed on each of unit areas including a plurality of pixels. In this case, the representative value of the pixel values of pixels included in a unit area is used as a value equivalent to the pixel value described in the above embodiments. The representative value is the average value of the pixel values of pixels included in a unit area, for example.

For example, the present invention may be implemented as a system targeted for diurnal poultry. Other than chickens, the diurnal poultry includes, for example, ducks, turkeys, and guinea fowls. In addition, the present invention may be implemented as a method and a system targeted for a livestock house and livestock other than the diurnal poultry. The present invention is especially useful as a method and a system used for monitoring livestock managed in herds (i.e., managed per group basis).

In addition, in the above-described embodiments, the livestock house monitoring system is implemented as a system including a plurality of devices, but the livestock house monitoring system may be implemented as a single device. Moreover, the livestock house monitoring system may be implemented as a client-server system.

In addition, the assignments of structural elements included in the livestock house monitoring system to the plurality of devices are a mere example. For example, a structural element included in a device may be included in another device. For example, the information terminal may include the display, instead of the display device including the display, and the display device may be omitted.

In addition, these comprehensive or concrete embodiments may be implemented by a device, a system, a method, an integrated circuit, a computer program, or a computer-readable recording medium such as a CD-ROM, or by any combination thereof. For example, the present invention may be implemented as a program for causing a computer to execute the livestock house monitoring method, and a non-transitory recording medium on which the program is recorded.

Furthermore, a process performed by a particular processor in the above embodiments may be performed by another processor. In addition, the order of a plurality of processes performed in the operations of the livestock house monitoring system described in the above embodiments is a mere example. The order of the plurality of processes may be changed or performed in parallel.

In addition, in the above-described embodiments, structural elements, such as the information processor, may be implemented by executing a software program suitable for each structural element. The structural elements, such as the information processor, may be implemented by means of a program executor, such as a CPU and a processor, reading and executing the software program recorded on a recording medium such as a hard disk or semiconductor memory.

In addition, the structural elements, such as the information processor, may be implemented by a hardware product. Specifically, the structural elements, such as the information processor, may be implemented by a circuit or an integrated circuit. These circuits may constitute a single circuit as a whole or may be individual circuits. Furthermore, each circuit may be a general-purpose circuit or may be a dedicated circuit.

The present invention also encompasses: embodiments achieved by applying various modifications conceivable to those skilled in the art to each embodiment; and embodiments achieved by optionally combining the structural elements and the functions of each embodiment without departing from the essence of the present invention.

[Reference Signs List]

| | |
|---|---|
| 10, 10a | livestock house monitoring system |
| 20, 20a | imaging device |
| 21 | image capturer |
| 32 | information processor |
| 50 | environment sensor |
| 100 | poultry house (livestock house) |

**Claims**

1. A livestock house monitoring method, comprising:

    capturing a moving image of an inside of a livestock house;
    converting a plurality of images included in the moving image captured into black-and-white images; and
    generating an image for monitoring purposes showing a distribution of livestock inside the livestock house by performing statistical processing on the plurality of images converted into the black-and-white images.

2. The livestock house monitoring method according to claim 1, further comprising:
    calculating a first parameter indicating a state of presence of the livestock in a particular area, based on the image for monitoring purposes generated, the particular area being a partial area of the image for monitoring purposes.

3. The livestock house monitoring method according to claim 2, wherein
    the calculating of the first parameter includes calculating the first parameter by dividing a sum total of pixel values of pixels included in the particular area by a sum total of pixel values of pixels included in a target area, the target area including the particular area and being larger than the particular area.

4. The livestock house monitoring method according to any one of claims 1 to 3, wherein

    the generating includes generating a plurality of images for monitoring purposes each of which is the image for monitoring purposes, and
    the livestock house monitoring method further comprises:
    calculating a second parameter indicating an amount of activity of the livestock in a particular area, based on the plurality of images for monitoring purposes generated.

5. The livestock house monitoring method according to claim 4, wherein
the calculating of the second parameter includes calculating the second parameter by dividing a sum total of absolute values of differences in pixel values between corresponding pixels included in particular areas in the plurality of images for monitoring purposes by a total number of pixels included in the particular area, the particular areas each being the particular area.

6. The livestock house monitoring method according to any one of claims 2 to 5, further comprising:
receiving designation of the particular area.

7. The livestock house monitoring method according to any one of claims 1 to 6, further comprising:
displaying the image for monitoring purposes generated.

8. The livestock house monitoring method according to claim 7, further comprising:

    obtaining environmental data of an environment surrounding the livestock, wherein
    the displaying includes simultaneously displaying the image for monitoring purposes and the environmental data obtained, the environmental data being data indicating an environment inside the livestock house.

9. The livestock house monitoring method according to any one of claims 1 to 8, wherein
the capturing includes capturing a moving image of an entirety of the inside of the livestock house.

10. A program for causing a computer to execute the livestock house monitoring method according to any one of claims 1 to 9.

11. A livestock house monitoring system, comprising:

    an image capturer that captures a moving image of an inside of a livestock house; and
    an information processor that converts a plurality of images included in the moving image captured by the image capturer into black-and-white images, and generates an image for monitoring purposes showing a distribution of livestock inside the livestock house by performing statistical processing on the plurality of images converted into the black-and-white images.

# FIG. 1

# FIG. 2

# FIG. 3

```
                    ┌─────────────┐
                    │    Start    │
                    └─────────────┘
                           │
                           ▼              ╭─ S11
        ┌────────────────────────────────┐
        │ Capture moving image of        │
        │ inside of poultry house        │
        └────────────────────────────────┘
                           │
                           ▼              ╭─ S12
        ┌────────────────────────────────┐
        │ Convert images included in     │
        │ moving image into black-and-   │
        │ white images                   │
        └────────────────────────────────┘
                           │
                           ▼              ╭─ S13
      ┌────────────────────────────────────────┐
      │ Generate image for monitoring purposes  │
      │ by performing averaging processing on   │
      │ black-and-white images                  │
      └────────────────────────────────────────┘
                           │
                           ▼              ╭─ S14
        ┌────────────────────────────────┐
        │ Display image for              │
        │ monitoring purposes            │
        └────────────────────────────────┘
                           │
                           ▼
                    ┌─────────────┐
                    │     End     │
                    └─────────────┘
```

# FIG. 4

(a) Color image

Image

T

...

Binary
image

t   Time

(b) Black-and-white
image

...

t   Time

Averaged
image

(c) Image for monitoring
purposes

FIG. 5

Waterer

Feeder

Waterer

# FIG. 6

Presence

Absence

# FIG. 7

Start

S21

Receive designation of particular area

S22

Calculate presence ratio

End

# FIG. 8

Exclusion
area

A4

A3

A1

A2

Target
area

# FIG. 9

Start

Receive designation of particular area — S31

Calculate presence ratio change — S32

End

# FIG. 10

| Item | Numerical value |
|---|---|
| Age in days | 30 |
| Number raised | 7614 |
| Rate of growth | 98.90% |
| Average weight | 1579 g [Reference value: 1680 g] |
| Total weight | 76 g [Reference value: 90 g] |
| Temperature inside poultry house | 24.5°C [Reference value: 23.5°C] |
| Outside temperature | 9.7°C |

Absence      Presence

# FIG. 11

40

41

<Changes in presence ratio over time>

0:00　6:00　12:00　18:00　0:00

<Changes in presence ratio change over time>

0:00　6:00　12:00　18:00　0:00

<Changes in temperature over time>

0:00　6:00　12:00　18:00　0:00

# FIG. 12

# FIG. 13

FIG. 14

**INTERNATIONAL SEARCH REPORT**

International application No.

PCT/JP2020/000219

A.  CLASSIFICATION OF SUBJECT MATTER
Int. Cl. H04N7/18(2006.01)i, A01K45/00(2006.01)i
FI: H04N7/18 D, A01K45/00 Z

According to International Patent Classification (IPC) or to both national classification and IPC

B.  FIELDS SEARCHED

Minimum documentation searched (classification system followed by classification symbols)
Int. Cl. H04N7/18, A01K45/00

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2017-192316 A (PANASONIC INTELLECTUAL PROPERTY MANAGEMENT CO., LTD.) 26 October 2017, paragraphs [0073]-[0099], fig. 1, 2, 5-7, entire text, all drawings | 1-2, 4, 6-11<br>3, 5 |
| Y<br>A | JP 2018-142039 A (SECOM CO., LTD.) 13 September 2018, paragraphs [0049]-[0067], fig. 5-8, entire text, all drawings | 1-2, 4, 6-11<br>3, 5 |
| Y<br>A | WO 2018/061976 A1 (HITACHI KOKUSAI ELECTRIC INC.) 05 April 2018, paragraph [0020], fig. 3, entire text, all drawings | 1-2, 4, 6-11<br>3, 5 |

☒  Further documents are listed in the continuation of Box C.        ☒  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>26.02.2020 | Date of mailing of the international search report<br>10.03.2020 |
|---|---|
| Name and mailing address of the ISA/<br> Japan Patent Office<br> 3-4-3, Kasumigaseki, Chiyoda-ku,<br> Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2020/000219

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-58056 A (MITSUBISHI ELECTRIC SYSTEM & SERVICE CO., LTD.) 10 March 2005, paragraphs [0032], [0058], [0059], fig. 1-4, entire text, all drawings | 4, 6-9 |
| A | | 3, 5 |
| Y | JP 2018-152733 A (FUJITSU LTD.) 27 September 2018, paragraphs [0029], [0036], [0037], fig. 2, 6, entire text, all drawings | 6-9 |
| A | | 3, 5 |
| A | JP 2002-281853 A (NORITZ CORP.) 02 October 2002, entire text, all drawings | 3, 5 |

Form PCT/ISA/210 (continuation of second sheet) (January 2015)

INTERNATIONAL SEARCH REPORT
Information on patent family members

International application No.

PCT/JP2020/000219

| Patent Documents referred to in the Report | Publication Date | Patent Family | Publication Date |
|---|---|---|---|
| JP 2017-192316 A | 26.10.2017 | (Family: none) | |
| JP 2018-142039 A | 13.09.2018 | (Family: none) | |
| WO 2018/061976 A1 | 05.04.2018 | US 2019/0180447 A1 paragraph [0028], fig. 3 | |
| JP 2005-58056 A | 10.03.2005 | (Family: none) | |
| JP 2018-152733 A | 27.09.2018 | US 2018/0260631 A1 paragraphs [0044], [0045], fig. 2, 6 EP 3376439 A1 paragraphs [0037], [0038], fig. 2, 6 | |
| JP 2002-281853 A | 02.10.2002 | (Family: none) | |

Form PCT/ISA/210 (patent family annex) (January 2015)

**EP 3 920 531 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006050989 A